# EUROPÄISCHE PATENTANMELDUNG

(11) **EP 0 999 677 A1**
(43) Veröffentlichungstag der Anmeldung: **10.05.2000**
(21) Anmeldenummer: 98120671.7
(22) Anmeldetag: 05.11.1998
(51) Int. Cl.: H04L 29/06

(54) **Verfahren und Vorrichtung zum Bereitstellen von Zustandsinformationen bei der Übertragung von Hypertextdokumenten über ein zustandloses Protokoll**

(71) Anmelder: Walkowiak, Olaf, 45145 Essen (DE); Sponagl, Paul, 51065 Köln (DE)
(72) Erfinder: Walkowiak, Olaf, 45145 Essen (DE); Sponagl, Paul, 51065 Köln (DE)
(74) Vertreter: Dendorfer, Claus

(57) **Zusammenfassung**

Bei einem Verfahren zum Bereitstellen von Zustandsinformationen bei der Übertragung von Hypertextdokumenten über ein zustandsloses Protokoll wird eine erste Anforderung (58) empfangen, eine Zustandsinformation bestimmt, ein erstes modifiziertes Hypertextdokument (68) gesendet (70), eine zweite Anforderung empfangen, die Zustandsinformation aus der zweiten Anforderung ermittelt, und ein zweites modifiziertes Hypertextdokument gesendet. Ein Vorrichtung weist entsprechende Merkmale auf. Durch die Erfindung wird insbesondere der programmiertechnische Aufwand für das Bereitstellen von Zustandsinformationen bei der Übertragung von Hypertextdokumenten über ein zustandsloses Protokoll verringert.

## Beschreibung

Die Erfindung betrifft die Übertragung von Daten, insbesondere Hypertextdokumenten, über ein zustandsloses Protokoll. Die Erfindung ist zum Einsatz für alle Anwendungen vorgesehen, bei denen einerseits ein zustandsloses Datenübertragungsprotokoll verwendet wird und andererseits eine Übermittlung von Zustandsinformationen von einem zum nächsten Datenzugriff erwünscht ist. Dies können beispielsweise Anwendungen des "electronic commerce" oder Online-Datenbanken oder Online-Verzeichnisse oder Online-Spiele sein.

Im Zusammenhang mit Internet-Anwendungen ist es bekannt, einen Identifikator als Zustandsinformation dadurch über mehrere Seitenzugriffe hinweg zu übertragen, daß der Identifikator in die URLs (uniform resource locators) eingebunden wird, auf die der Zugriff erfolgt. Ein Benutzer, der den Internet-Bereich ("domain") eines Anbieters besucht, erhält beim ersten Zugriff ein Hypertextdokument, dessen Verweise ("links") außer einer Zieladresse des Verweises auch eine den Benutzer oder die Benutzersitzung ("session") identifizierende Informationskomponente aufweisen. Wenn der Benutzer einen solchen Verweis aufruft, wird die Informationskomponente zu einem Server übertragen und von diesem ausgewertet.

Bei diesen Internet-Anwendungen ist serverseitig eine Datenbank vorgesehen, die jede an den Besucher übermittelte Seite nach vorgegebenen Regeln zusammenstellt. Das Definieren dieser Regeln und das entsprechende Programmieren der Datenbank sind mit hohem Aufwand verbunden. Es werden Spezialisten benötigt, die mehrere unterschiedliche Programmiersprachen beherrschen und genaue Detailkenntnisse über die eingesetzte Hard- und Software haben. Ferner treten bei der Kommunikation zwischen den technischen Spezialisten und den Designern des äußeren Erscheinungsbilds der Internet-Anwendung gelegentlich Mißverständnisse auf, wodurch der Entwicklungsprozeß weiter erschwert wird.

Ferner ist es bekannt, Zustandsinformationen auf dem Rechner des Benutzers unter Steuerung des Servers zu speichern (sogenannte "cookies"). Wegen des vermeintlichen oder tatsächlichen Risikos, daß Daten auf diesem Rechner ausgespäht oder durch einen Virus zerstört werden, ist dieses Verfahren jedoch bei den Benutzern nicht beliebt. Viele Benutzer konfigurieren ihren Browser so, daß keine Speicherung und kein Zugriff auf cookies zugelassen werden.

Es ist daher Aufgabe der Erfindung, die genannten Probleme zu vermeiden und ein Verfahren sowie eine Vorrichtung vorzuschlagen, durch die sich mit möglichst geringem Aufwand Zustandsinformationen bei der Übertragung von Hypertextdokumenten über ein zustandsloses Protokoll bereitstellen lassen. Insbesondere soll durch die Erfindung der programmiertechnische Aufwand verringert werden, so daß auch technisch weniger versierten Designern die gewünschte Funktionalität bereitgestellt werden kann.

Erfindungsgemäß wird diese Aufgabe durch ein Verfahren mit den Merkmalen des Anspruchs 1 sowie durch eine Vorrichtung mit den Merkmalen des Anspruchs 10 gelöst. Die abhängigen Ansprüche betreffen bevorzugte Ausgestaltungen der Erfindung.

Die Erfindung beruht auf der Grundidee, vorgegebene Hypertextdokumente in einem automatischen Verfahren so zu modifizieren, daß die gewünschte Zustandsinformation übermittelt und insbesondere in einige oder alle Hypertextverweise aufgenommen wird. Entsprechend wird beim darauffolgenden Empfang einer Anforderung, die auf einem modifizierten Hypertextverweis beruht, aus dieser Anforderung die Zustandsinformation ermittelt und im weiteren Verfahrensablauf verwertet. Im Gegensatz zum eingangs genannten Stand der Technik setzt die Erfindung auf Hypertextdokumenten (und nicht auf speziellen Datenbankprogrammen) auf.

Insgesamt ermöglicht die Erfindung eine automatische Modifikation von Hypertextdokumenten, so daß einzelne Benutzer und/oder Benutzersitzungen unterschieden und identifiziert werden können. Mit anderen Worten findet eine automatische Individualisierung der vorher statischen Hypertextdokumente statt. Bei der Erstellung der vorgegebenen Hypertextdokumente braucht dieser später automatisch ablaufende Individualisierungsvorgang vorzugsweise nicht berücksichtigt zu werden. Für den Designer der Hypertextdokumente fällt dann kein Lernaufwand an, und alle üblichen Werkzeuge zum Erstellen der Hypertextdokumente (sogenannte "authoring tools") können eingesetzt werden.

Durch die Erfindung werden somit die eingangs genannten Anwendungen ohne Programmieraufwand für jeden Designer von Hypertextdokumenten verfügbar. Auch für Angebote, die eine Zustandsinformation nicht unbedingt erfordern, ist ein Einsatz der Erfindung vorteilhaft. Durch die Erfindung kann beispielsweise bei beliebigen Netzen von Hypertextdokumenten der Weg eines Benutzers während einer Benutzersitzung nachvollzogen werden (sogenanntes "session tracking").

Als "Hypertextdokumente" sollen hier insbesondere Dateien verstanden werden, die zur Ansicht durch einen Benutzer darstellbar sind und Verknüpfungen oder Verweise ("links") zu anderen Ressourcen, insbesondere anderen Hypertextdokumenten, aufweisen. Auch Seiten, die vorwiegend oder ausschließlich graphisch ausgestaltet sind, gelten in diesem Sinne als Hypertextdokumente. Vorzugsweise sind die Hypertextdokumente in der Seitenbeschreibungssprache SGML ("standard generalized markup language") und/oder HTML ("hypertext markup language") und/oder XML ("extensible markup language") abgefaßt. Ferner enthält in bevorzugten Ausgestaltungen der Erfindung jeder Hypertextverweis einen URL ("uniform resource locator") und/oder einen Anker-Tag (〈A ...〉 ... 〈/A〉), der seinerseits ein HREF-Attribut mit dem URL als Attributwert aufweist.

Unter einem "zustandslosen Protokoll" wird insbesondere jedes Datenübertragungsprotokoll angesehen, das verbindungslos arbeitet und somit keine unmittelbaren Informationen über den Aufbau, das Fortbestehen oder das Ende einer Benutzersitzung liefert. In bevorzugten Ausführungsformen der Erfindung wird ein Internet-Protokoll wie beispielsweise das HTTP-Protokoll ("hypertext transfer protocol") verwendet.

Als Zustandsinformation kann jede beliebige Information in jeder beliebigen Codierung dienen. Vorzugsweise ist die Zustandsinformation jedoch ein Identifikator, der dem auf ein Hypertextdokument zugreifenden Benutzer oder der Benutzersitzung ("session") zugeordnet ist. Ein solcher Identifikator wird im Regelfall während einer Benutzersitzung nicht verändert. In anderen Ausführungsalternativen erfolgt jedoch eine Veränderung des Zustands und/oder der Zustandsinformation, um zum Beispiel eine Änderung des Inhalts eines virtuellen Warenkorbes oder eine Änderung eines Online-Spielstandes anzuzeigen. Die Erfindung gestattet beliebig lange Benutzersitzungen, in deren Verlauf die Zustandsinformation beliebig oft zwischen einem Browser des Benutzers und dem Server hin- und hergesendet werden kann.

Erfindungsgemäß werden zumindest solche Hypertextverweise modifiziert, die einer vorbestimmten Bedingung genügen. Diese Bedingung kann zum Beispiel sein, daß der Verweis auf ein Hypertextdokument zeigt, das seinerseits gemäß der Erfindung verarbeitet wird. In Extremfällen kann die vorbestimmte Bedingung aber auch so umfassend sein, daß jeder Verweis eines Hypertextdokuments modifiziert wird, oder so eng, daß kein Verweis des Dokuments die Bedingung erfüllt.

Neben der Veränderung einschlägiger Hypertextverweise ist in bevorzugten Weiterbildungen der Erfindung vorgesehen, durch weitere automatische Modifikationen der gesendeten Hypertextdokumente (insbesondere durch das Einbinden von weiteren Informationen) zusätzliche Funktionalitäten bereitzustellen. Insbesondere betrifft dies das Einfügen der Zustandsinformation in Tabellenfelder und/oder das zustandsabhängige Einfügen zusätzlicher Codefragmente der Seitenbeschreibungssprache in das gesendete Dokument.

Vorzugsweise wird die Zustandsinformation durch den Server unabhängig vom Inhalt der ersten Anforderung bestimmt. Beispielsweise kann die Zustandsinformation zufällig festgelegt werden und/oder eine Zeitinformation tragen. Zur Modifikation eines Hypertextverweises wird die Zustandsinformation vorzugsweise in den ursprünglichen Hypertextverweis eingefügt, zum Beispiel an diesen angehängt. Aus jeder eingehenden Anforderung sind bevorzugt zumindest die Zustandsinformation und das Ziel der Anforderung ermittelbar.

Die durch die Erfindung vorgenommenen Veränderungen der vorgegebenen Hypertextdokumente sind in bevorzugten Ausführungsformen relativ gering. Insbesondere ist vorgesehen, daß die ursprünglichen Hypertextdokumente, die vom Designer erstellt werden, in derselben Seitenbeschreibungssprache (gegebenenfalls mit geringfügigen Erweiterungen) abgefaßt sind wie die tatsächlich gesendeten, modifizierten Dokumente. Auch die Darstellung der ursprünglichen und der modifizierten Dokumente in einem Browser ist vorzugsweise ähnlich oder sogar identisch. Durch diese Merkmale wird erreicht, daß ein Designer, der "normale" Hypertextdokumente entwerfen kann, nicht umlernen muß, um die Erfindung einzusetzen.

Zur Effizienzsteigerung ist vorzugsweise vorgesehen, Berechnungsschritte, die für eine Vielzahl von Anforderungen identisch anfallen, vorab durchzuführen. Zum Beispiel können vorverarbeitete Hypertextdokumente erzeugt werden, bei denen sich die gewünschten Modifikationen von Verweisen besonders schnell durchführen lassen.

Die erfindungsgemäße Vorrichtung ist vorzugsweise mit Merkmalen weitergebildet, die den oben erwähnten und/oder in den abhängigen Verfahrensansprüchen definierten Merkmalen entsprechen.

Mehrere Ausführungsbeispiele der Erfindung werden im folgenden unter Hinweis auf die schematischen Zeichnungen genauer beschrieben. Es zeigen:
Fig. 1 eine schematische Darstellung zweier Hypertextdokumente,
Fig. 2 eine Darstellung der bei dem Zugriff auf Hypertextdokumente über das Internet beteiligten Komponenten,
Fig. 3 ein Ablaufdiagramm von Datenübertragungsvorgängen nach dem Stand der Technik,
Fig. 4 und Fig. 5 Ablaufdiagramme von Datenübertragungsvorgängen bei einem erfindungsgemäßen Ausführungsbeispiel, und
Fig. 6 ein ausschnittsweises Flußdiagramm einer erfindungsgemäßen Ausführungsalternative.

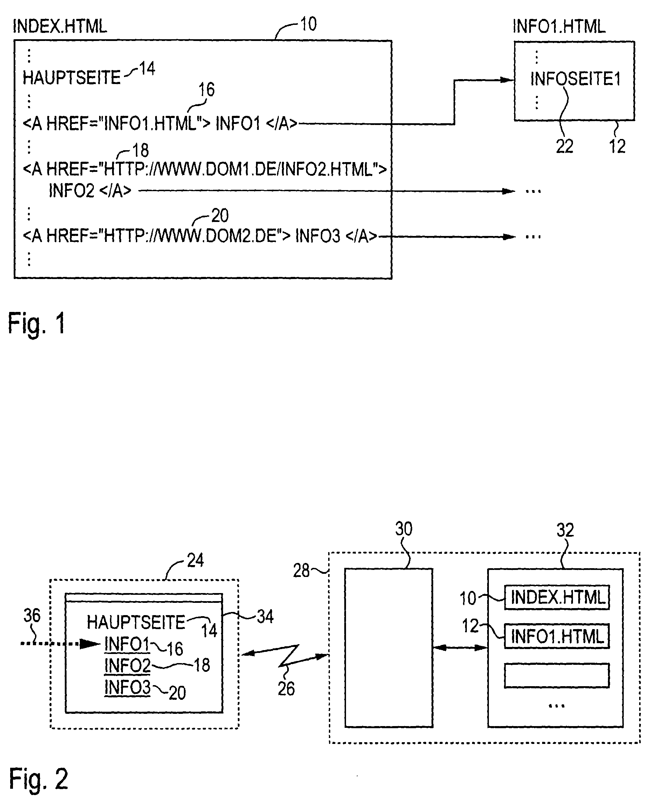

In Fig. 1 sind schematisch zwei Hypertextdokumente 10, 12 mit den Dateinamen index.html beziehungsweise info1.html dargestellt. Die beiden Hypertextdokumente 10, 12 sind in der Seitenbeschreibungssprache HTML abgefaßt. Das erste Hypertextdokument 10 (index.html) weist einen in Fig. 1 beispielhaft gezeigten Inhalt 14 sowie drei Hypertextverweise 16, 18, 20 auf. Jeder Hypertextverweis 16, 18, 20 besteht aus einem Anker-Tag 〈A ...〉 ... 〈/A〉, das je einen Bezeichnertext ("info1", "info2", "info3") sowie ein HREF-Attribut aufweist. Als Wert des HREF-Attributs ist je ein URL vorgesehen. Diese Datenstrukturen sind an sich bekannt und auf den Internet-Seiten des W3-Konsortiums beschrieben, die über den URL http://www.w3c.org abrufbar sind.

Der erste Hypertextverweis 16 stellt eine Verbindung oder Verknüpfung zu dem zweiten Hypertextdokument 12 (info1.html) her, das als "internes Hypertextdokument" bezeichnet wird, weil es sich im selben Internet-Bereich ("domain") wie das erste Hypertextdokument 10 befindet. Der zweite und der dritte Hypertextverweis 18, 20 zeigen auf externe Hypertextdokumente, die in anderen Internet-Bereichen angeordnet sind. Im folgenden wird angenommen, daß der Internet-Bereich www.dom1.de des zweiten Hypertextverweises 18 einem Anbieter zugeordnet ist, der ebenfalls die Erfindung einsetzt, während im Internet-Bereich www.dom2.de des dritten Hypertextverweises 20 die Erfindung nicht verwendet wird.

Zum Abrufen und Betrachten von Hypertextdokumenten dient allgemein die in Fig. 2 schematisch gezeigte Anordnung. Ein Browser 24, beispielsweise das unter dem Namen Netscape Navigator bekannte Programm, wird auf einem persönlichen Computer eines Benutzers ausgeführt. Der Browser 24 ist über ein Computernetzwerk 26, im vorliegenden Beispiel das Internet, mit einem Server 28 verbunden. Für die Verbindung wird ein zustandsloses Protokoll, im vorliegenden Fall das HTTP-Protokoll, eingesetzt. Dieses Protokoll sieht Anforderungen ("requests") des Browsers 24 vor, die durch Antworten ("replies") des Servers 28 beantwortet werden. Das Protokoll wird als zustandslos bezeichnet, weil aufeinanderfolgende Anfragen und Antworten nicht aufeinander Bezug nehmen.

Der Server 28 ist als leistungsfähiger Universalrechner mit einer an sich bekannten Hardware ausgestaltet. Er weist gemäß Fig. 2 eine Steuereinheit 30 auf, die mit einer Datenspeichereinheit 32 kommuniziert. Die Steuereinheit 30 analysiert und bearbeitet die Anforderungen des Browsers 24, greift erforderlichenfalls auf Dokumente in der Datenspeichereinheit 32 zu, und erzeugt und sendet entsprechende Antworten an den Browser 24.

Fig. 2 zeigt beispielhaft, wie der Browser 24 das erste Hypertextdokument 10 in einem Fenster 34 anzeigt. Der Inhalt 14 wird vollständig als formatierter Text dargestellt, während die drei Hypertextverweise 16, 18, 20 nur mit ihrem jeweiligen in das Anker-Tag eingeschlossenen Bezeichnertext angezeigt werden. Der Bezeichnertext ist jeweils unterstrichen, um das Vorhandensein eines Hypertextverweises zu kennzeichnen. Durch einen in Fig. 2 als gepunkteter Pfeil dargestellten Mausklick 36 auf einen Verweis (hier beispielsweise den ersten Hypertextverweis 16) wird das zugehörige Hypertextdokument (hier das zweite Hypertextdokument 12) aufgerufen und im Fenster 34 des Browsers 24 angezeigt.

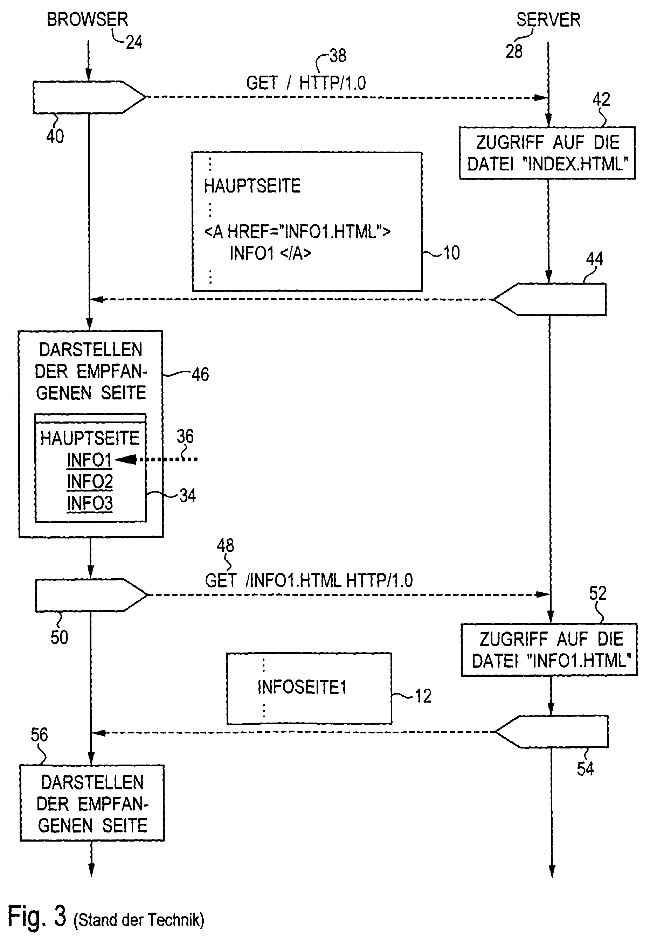

In Fig. 3 ist ein beispielhafter Kommunikationsvorgang zwischen dem Browser 24 und dem Server 28 nach dem Stand der Technik gezeigt. In Reaktion auf eine Eingabe des Benutzers sendet der Browser 24 eine erste Anforderung 38 an den Server 28 (Sendeaktion 40). In der ersten Anforderung 38 (get / http/1.0) bezeichnet "get" die Art der Anforderung und "http/1.0" die zugrundeliegende Protokollversion. Das dazwischenliegende Zeichen "/" steht für einen leeren Dateinamen und gibt an, daß eine vom Server 28 vorgegebene Hauptseite des angesprochenen Internet-Bereichs angefordert werden soll.

Die erste Anforderung 38 wird vom Server 28 in einen Zugriff auf das erste Hypertextdokument 10 (index.html) umgesetzt (Schritt 42). Das so angeforderte erste Hypertextdokument 10 wird nun in einer Sendeaktion 44 an den Browser 24 übermittelt, der in Schritt 46 die empfangene Seite in dem Fenster 34 darstellt, wie dies bereits in Zusammenhang mit Fig. 2 erläutert wurde.

In Reaktion auf den Mausklick 36 des Benutzers auf den ersten Hypertextverweis 16 (Fig. 2) sendet der Browser 24 eine zweite Anforderung 48 an den Server 28. Die zweite Anforderung 48 enthält wiederum den Anforderungstyp "get" und die Protokollversion "http/1.0" sowie den Dateinamen "info1.html" des zweiten Hypertextdokuments 12. Dieser Dateiname wurde vom Browser 24 aus dem Argument des HREF-Attributs des ersten Hypertextverweises 16 (Fig. 1) ermittelt. Der Server 28 empfängt die zweite Anforderung 48 und greift in einem Schritt 52 auf die entsprechende Datei "info1.html" zu. Das entsprechende zweite Hypertextdokument 12 (Fig. 1) wird an den Browser 24 gesendet (Sendeaktion 54), der seinerseits die empfangenen Daten darstellt (Schritt 56).

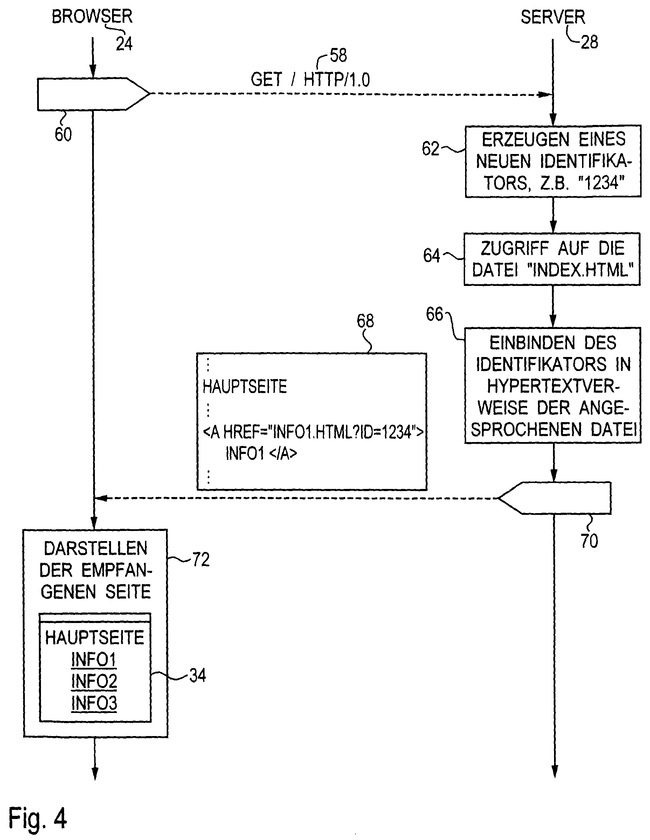

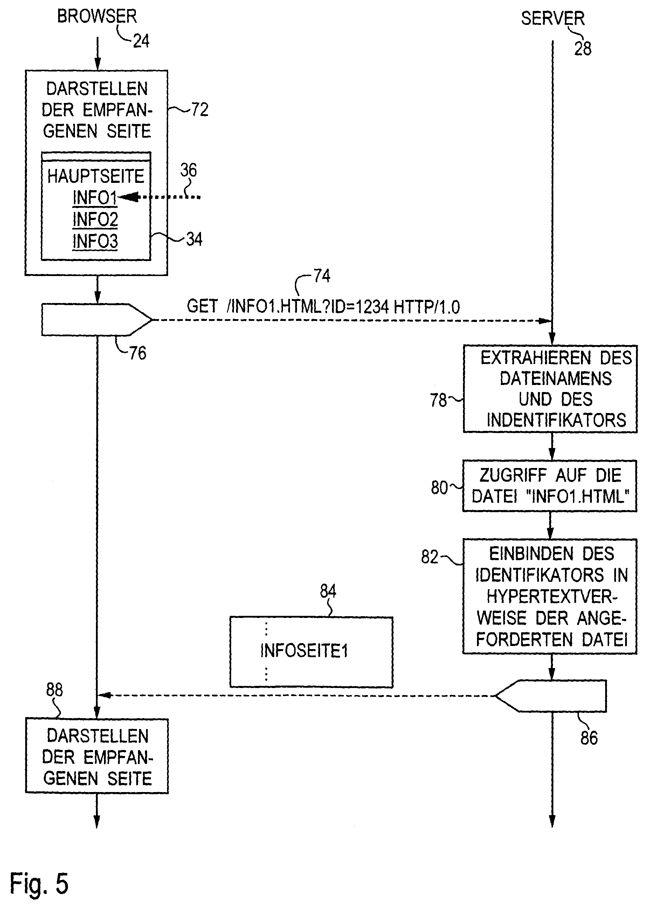

Das in Fig. 4 und Fig. 5 gezeigte Ablaufbeispiel gemäß der Erfindung entspricht, was die für den Benutzer am Browser 24 sichtbare Darstellung angeht, dem bekannten Ablauf von Fig. 3. Jedoch werden bei dem erfindungsgemäßen Ablauf zusätzlich Zustandsinformationen bereitgestellt und übertragen. Diese Informationen ermöglichen beispielsweise Anwendungen auf dem Gebiet des "electronic commerce", weil der Weg des Benutzers oder Besuchers durch die Hypertextdokumente eines Internet-Anbieters verfolgt werden kann und Informationen, die beispielsweise einen Warenkorb betreffen, von einem zum nächsten Zugriff auf ein Hypertextdokument weitergeleitet werden können. Die beiden in Fig. 4 und Fig. 5 gezeigten Abschnitte des Ablaufbeispiels unterscheiden sich dadurch, daß Fig. 4 den Beginn einer neuen Benutzersitzung (mit einem neuen, vom Server 28 generierten Identifikator) und Fig. 5 das Fortsetzen einer laufenden Benutzersitzung (mit einem aus der letzten Anforderung des Browsers 24 abgeleiteten Identifikator) darstellt.

Auch die Darstellung des Ausführungsbeispiels gemäß Fig. 4 und Fig. 5 nimmt Bezug auf Fig. 1 und Fig. 2. In dem dort gezeigten Detaillierungsgrad betreffen Fig. 1 und Fig. 2 daher sowohl den Stand der Technik als auch das erfindungsgemäße Ausführungsbeispiel. Insbesondere ist der in Fig. 2 gezeigte Server 28, bei geeigneter Programmierung, auch eine Vorrichtung im Sinne der Erfindung.

Ebenso wie im Ablauf nach Fig. 3 beginnt der in Fig. 4 gezeigte Ablauf damit, daß der Browser 24 eine erste Anforderung 58 an den Server 28 sendet (Sendeaktion 60). Der Server 28 empfängt die Anforderung 58 und analysiert, ob ein neuer Identifikator als Zustandsinformation erzeugt werden soll. Dies ist immer dann der Fall, wenn die Anforderung den Beginn einer neuen Benutzersitzung anzeigt. Die in Fig. 4 gezeigte erste Anforderung 58 enthält weder einen Dateinamen eines zu übertragenden Hypertextdokuments noch Zustandsinformationen, so daß offensichtlich der Beginn einer neuen Benutzersitzung angenommen werden kann. Es wird daher in Schritt 62 ein neuer Identifikator als Zustandsinformation erzeugt, und zwar im vorliegenden Beispiel der numerische Identifikator "1234".

Allgemein sind Kriterien, die für den Beginn einer neuen Benutzersitzung sprechen, das Fehlen eines Dateinamens und/oder einer Zustandsinformation in einer Anforderung. Ferner kann das Alter der Zustandsinformationen als Kriterium verwendet werden. Die Zustandsinformationen können nämlich in Ausführungsvarianten einen codierten Zeitstempel enthalten oder über eine serverseitige Datenbank einem Zeitstempel zugeordnet sein. Der Zeitstempel kann den Generierungszeitpunkt der Zustandsinformation und/oder eine Gültigkeitszeit anzeigen. Empfängt der Server 28 eine Anforderung, die eine Zustandsinformation mit abgelaufener Gültigkeitsdauer enthält, so kann die empfangene Zustandsinformation verworfen und eine neue Benutzersitzung (mit neu zu generierender Zustandsinformation) begonnen werden. In unterschiedlichen Ausführungsvarianten der Erfindung können die genannten Kriterien und/oder andere Kriterien beliebig kombiniert werden, um zu bestimmen, ob eine neue Benutzersitzung begonnen oder eine bereits begonnene Benutzersitzung fortgesetzt werden soll. Wie bereits erwähnt, entsprechen diese beiden Fälle den in Fig. 4 beziehungsweise Fig. 5 gezeigten Abschnitten des Beispielablaufs.

In Schritt 62 wurde beispielhaft der Identifikator "1234" als Zustandsinformation generiert. Statt eines solchen numerischen Identifikators kann jede andere Art der Zustandsinformation verwendet werden. Wenn die Zustandsinformation zur Identifizierung von Benutzern oder Benutzersitzungen dient, kann sie insbesondere numerisch oder alphanumerisch, jeweils mit oder ohne Zeitstempel, ausgestaltet sein. Ferner können Informationen über den Inhalt eines Warenkorbes oder über den Zustand eines Online-Spiels oder einer Online-Anfrage oder andere Informationen in der Zustandsinformation gespeichert und von einer ersten zu einer zweiten Anforderung übertragen werden.

In Schritt 64 des Ablaufs erfolgt nun ein Zugriff auf die durch die erste Anforderung 58 angesprochene Datei. Da im vorliegenden Beispielsablauf die erste Anforderung 58 keinen Dateinamen enthielt, wird hier wieder die serverseitig vorgegebene Standarddatei "index.html" verwendet. Falls eine Anforderung ein Hypertextdokument bezeichnet, aber dennoch als erste Anforderung einer Benutzersitzung interpretiert wird (weil beispielsweise die Zustandsinformationen fehlen oder deren Gültigkeit abgelaufen ist), so wird dagegen auf die in der Anforderung angegebene Datei zugegriffen.

Im folgenden Schritt 66 wird der in Schritt 62 erzeugte Identifikator in solche Verweise oder Verknüpfungen der in Schritt 64 aufgerufenen Datei eingebunden, die eine vorgegebene Bedingung erfüllen. Im hier beschriebenen Ausführungsbeispiel lautet die Bedingung, daß nur solche Hypertextverweise modifiziert werden sollen, die entweder auf interne Hypertextdokumente oder auf externe Hypertextdokumente von Internet-Bereichen verweisen, in denen ebenfalls die Erfindung angewendet wird. Am Beispiel des Hypertextdokuments 10 (index.html; Fig. 1) werden somit nur die Hypertextverweise 16 und 18 modifiziert, während der Hypertextverweis 20 unverändert bleibt. In Ausführungsalternativen können andere vorgegebene Bedingungen zum Bestimmen der zu modifizierenden Hypertextverweise verwendet werden.

Das Einbinden der Zustandsinformation beziehungsweise des Identifikators in Schritt 66 geschieht dergestalt, daß an den Wert des HREF-Attributs im Anker-Tag jedes zu modifizierenden Hypertextverweises die Zeichen "?id=" sowie der in Schritt 62 erzeugte Identifikator angehängt werden. In Ausführungsalternativen sind andere Codierungen vorgesehen. Wichtig ist lediglich, daß aus einem modifizierten Hypertextverweis das angesprochene Hypertextdokument identifizierbar ist und die Zustandsinformation abgeleitet werden kann. Diese beiden Informationen können in dem modifizierten Hypertextverweis in beliebiger Weise (gegebenenfalls auch verschlüsselt) enthalten sein, oder der modifizierte Hypertextverweis kann einen Bezeichner enthalten, der über eine serverseitige Datenbankabfrage einen Zugriff auf die beiden genannten Informationen ermöglicht.

Das in Schritt 66 erzeugte erste modifizierte Hypertextdokument 68 wird in einer Sendeaktion 70 an den Browser 24 übertragen. Wie aus Fig. 4 ersichtlich ist, wurde hier der ursprüngliche Wert "info1.html" des HREF-Attributs im ersten Hypertextverweis 16 durch den Wert "info1.html?id=1234" ersetzt. Eine entsprechende Ersetzung wurde im zweiten Hypertextverweis 18 vorgenommen, während der dritte Hypertextverweis 20 unverändert belassen wurde (nicht in Fig. 4 gezeigt). Der Browser 24 stellt in Schritt 72 das erste modifizierte Hypertextdokument 68 im Fenster 34 dar. Da keine Veränderungen des Inhalts 14 oder der Bezeichnertexte der Hypertextverweise 16, 18, 20 vorgenommen wurden, ist die Darstellung identisch mit der Darstellung des ersten (nichtmodifizierten) Hypertextdokuments 10, wie sie beispielsweise in Schritt 46 von Fig. 3 gezeigt ist. Der Benutzer bemerkt daher keinen Unterschied durch den Einsatz der Erfindung.

Der in Fig. 5 gezeigte Ausschnitt des Beispielablaufs überlappt sich durch Schritt 72 mit dem Ausschnitt von Fig. 4. Wenn der Benutzer den ersten Hypertextverweis 16 (Fig. 2) durch den Mausklick 36 aufruft, generiert der Browser 24 eine zweite Anforderung 74, die neben dem Anforderungstyp "get" und der Protokollversion "http/1.0" den Wert des HREF-Attributs aus dem entsprechenden Hypertextverweis des ersten modifizierten Hypertextdokuments 68 enthält. Im vorliegenden Beispiel ist dies der Wert "info1.html?id=1234". Die zweite Anforderung 74 wird in einer Sendeaktion 76 an den Server 28 geschickt, der sie empfängt und daraus in Schritt 78 den angesprochenen Dateinamen (info1.html) und den Identifikator (1234) als Zustandsinformation extrahiert. Im vorliegenden Beispiel ist dieser Verarbeitungsschritt unproblematisch, während in Ausführungsalternativen, die eine komplexere Codierung des angesprochenen Dateinamens und der Zustandsinformation vorsehen, eine entsprechende Decodierung und gegebenenfalls eine Datenbankabfrage erfolgen muß.

In Schritt 80 erfolgt der Zugriff auf die angesprochene Datei, die im vorliegenden Beispiel das zweite Hypertextdokument 12 (Fig. 1) mit dem Dateinamen "info1.html" ist. In Schritt 82 wird das angeforderte Hypertextdokument wiederum modifiziert, indem der in Schritt 78 ermittelte Identifikator in alle oder manche Verknüpfungen der Datei eingebunden wird. Die Schritte 80 und 82 in Fig. 5 entsprechen den Schritten 64 und 66 in Fig. 4, so daß auf die oben gegebene Beschreibung verwiesen wird.

Das als Ergebnis von Schritt 82 erhaltene zweite modifizierte Hypertextdokument 84 wird in einer Sendeaktion 86 an den Browser 24 übertragen. Das empfangene Hypertextdokument 84 wird schließlich in Schritt 88 durch den Browser 24 dargestellt.

Im vorliegenden Beispiel ist kein Hypertextverweis des zweiten Hypertextdokuments 12 (Fig. 1) dargestellt, und bezüglich des Inhalts 22 ist das zweite Hypertextdokument 12 identisch mit dem zweiten modifizierten Hypertextdokument 84. Allgemein ist es beim erfindungsgemäßen Verfahren möglich, daß sich ein modifiziertes Hypertextdokument nicht von dem zugrundeliegenden Hypertextdokument unterscheidet, wenn in letzterem kein zu modifizierender Hypertextverweis enthalten ist. Wenn jedoch in anderen Fällen das zweite modifizierte Hypertextdokument 84 seinerseits Hypertextverweise aufweist, in die in Schritt 82 der Identifikator als Zustandsinformation eingefügt wurde, so kann sich der Ablauf von Fig. 5 beliebig oft bei Schritt 72 fortsetzen. Der einmal in Schritt 62 erzeugte Identifikator wird solange beibehalten und zwischen dem Browser 24 und dem Server 28 ausgetauscht, wie nach den oben genannten Kriterien eine fortdauernde Benutzersitzung festgestellt wird.

Durch das in Fig. 4 und Fig. 5 beispielhaft beschriebene Verfahren erfolgt somit eine automatische Individualisierung der vorgegebenen statischen Hypertextdokumente 10, 12. Beim Entwurf dieser Dokumente braucht der Designer dies in keiner Weise zu berücksichtigen. Er oder sie kann gängige Hypertext-Editoren einsetzen und die damit erstellten Dokumente sofort lokal mittels eines Browsers ansehen und überprüfen. Diese vom Designer erstellten Hypertextdokumente, die für sich ein voll funktionsfähiges Hypertext-Netz (im vorliegenden Beispiel nach dem HTML-Standard) ergeben, werden auf an sich bekannte Weise (zum Beispiel über ein FTP-Protokoll) an den Server 28 übertragen. Nachdem die Dokumente auf den Server 28 aufgespielt worden sind (genauer gesagt, in dessen Datenspeichereinheit 32), stehen sofort und ohne weitere Konfiguration die durch die Erfindung geschaffenen Möglichkeiten (zum Beispiel session tracking) zur Verfügung.

Neben der Modifikation von Hypertextverweisen (wie in den Schritten 66 und 82) sind in Ausführungsalternativen der Erfindung weitere Umwandlungs- und/oder Ersetzungsschritte beim Erzeugen der modifizierten Hypertextdokumente 68, 84 vorgesehen. Beispielsweise können beliebige durch den Designer der Hypertextdokumente bestimmte Ersetzungen vorgenommen werden, um etwa spezielle Hypertextverweise oder Codefragmente oder Seitenbeschreibungssprachen-Fragmente einzufügen. So ist in Ausführungsvarianten vorgesehen, eine Möglichkeit zum Anzeigen des Inhalts eines virtuellen Warenkorbes zu schaffen, und/oder Verweise in modifizierten Hypertextdokumenten zu erzeugen, mit denen Artikel in einen solchen Warenkorb gelegt werden können, und/oder zustandsabhängige Informationen in die modifizierten Hypertextdokumente einzufügen.

In weiteren Ausführungsvarianten wird die erfindungsgemäße Idee des Einfügens von Zustandsinformationen auch auf Formularinhalte angewendet. Dazu wird beim Erstellen der modifizierten Hypertextdokumente 68, 84 in Formulardefinitionen der zugrundeliegenden Dokumente die jeweilige Zustandsinformation als verborgenes Feld ("hidden field") eingefügt. Die Ausgabe des entsprechenden Skripts wird dann als normale HTML-Seite behandelt.

Zur Effizienzsteigerung sind ferner Ausführungsalternativen vorgesehen, bei denen die Modifikation der Hypertextdokumente 10, 12 in zwei Stufen erfolgt. In einer ersten Stufe, die vorab durchgeführt wird und unabhängig von konkreten Zustandsinformationen ist, werden die Hypertextdokumente 10, 12 so vorverarbeitet, daß in der zweiten Stufe die gewünschten Zustandsinformationen möglichst schnell und effizient eingebunden werden können. Genauer gesagt, werden in der ersten Stufe alle diejenigen Hypertextverweise identifiziert und markiert, die beim späteren Senden eines Dokuments modifiziert werden sollen. Da das Auffinden eines Hypertextverweises und dessen Analyse (insbesondere im Hinblick darauf, ob ein externer Verweis auf einen Internet-Bereich zeigt, in dem die Erfindung eingesetzt wird) relativ rechenaufwendig ist, kann durch das Ausführen der vorbereitenden ersten Stufe jede einzelne spätere Anforderung schneller bearbeitet werden, da für sie nur noch die zweite Stufe ausgeführt zu werden braucht.

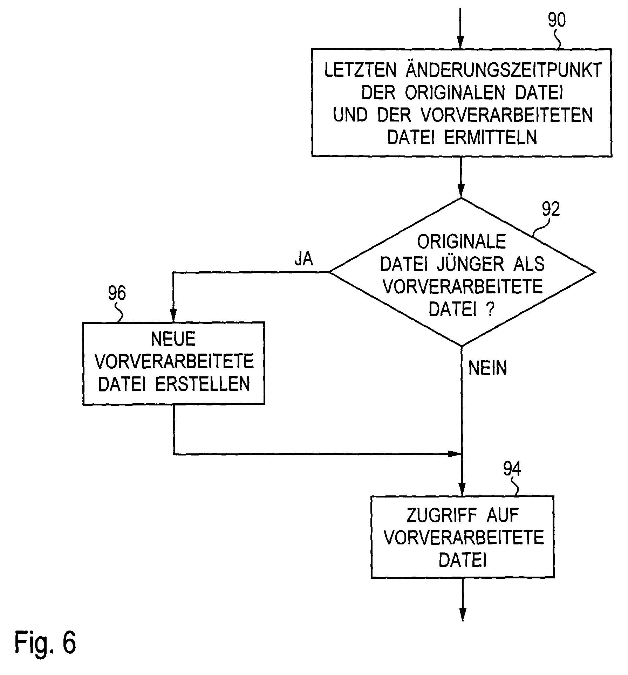

Während in manchen Ausführungsalternativen die erste Stufe unmittelbar im Anschluß an das Aufspielen der Hypertextdokumente 10, 12 auf den Server 28 vorgesehen ist, wird in bevorzugten anderen Ausführungsvarianten bei jedem Zugriff auf ein Hypertextdokument jeweils das in Fig. 6 dargestellte Verfahren ausgeführt.

Gemäß Fig. 6 werden in einem ersten Schritt 90 zunächst der letzte Änderungszeitpunkt des ursprünglichen Hypertextdokuments 10, 12 sowie der entsprechenden vorverarbeiteten Datei ermittelt. Falls das ursprüngliche Hypertextdokument 10, 12 nicht jünger als die vorverarbeitete Datei ist (Abfrage 92), so ist die vorverarbeitete Datei noch aktuell und kann für die Ausführung der zweiten Stufe herangezogen werden (Schritt 94). Andernfalls wurde seit dem letzten Zugriff auf die entsprechende Hypertextseite eine neue Version des originalen Hypertextdokuments 10, 12 aufgespielt. In diesem Fall muß zunächst in Schritt 96 durch Ausführen der ersten Stufe eine neue vorverarbeitete Datei erzeugt werden, auf die dann ihrerseits zugegriffen wird.

## Patentansprüche

1. Verfahren zum Bereitstellen von Zustandsinformationen bei der Übertragung von Hypertextdokumenten über ein zustandsloses Protokoll, mit den Schritten:
a) Empfangen einer ersten Anforderung (58) für ein erstes Hypertextdokument (10),
b) Bestimmen einer Zustandsinformation,
c) Senden (70) eines ersten modifizierten Hypertextdokuments (68), das sich zumindest dadurch von dem ersten Hypertextdokument (10) unterscheidet, daß jeder einer vorbestimmten Bedingung genügende Hypertextverweis (16, 18, 20) in dem ersten Hypertextdokument (10) entsprechend der Zustandsinformation modifiziert ist,
d) Empfangen einer zweiten Anforderung (74) für ein zweites Hypertextdokument (12), wobei die Zustandsinformation aus der zweiten Anforderung (74) ermittelbar ist,
e) Ermitteln der Zustandsinformation aus der zweiten Anforderung (74), und
f) Senden (86) eines zweiten modifizierten Hypertextdokuments (84), das in Abhängigkeit von der Zustandsinformation modifiziert ist.

2. Verfahren nach Anspruch 1,
dadurch gekennzeichnet, daß sich das in Schritt f) gesendete zweite modifizierte Hypertextdokument (84) zumindest dadurch von dem zweiten Hypertextdokument (12) unterscheidet, daß jeder einer vorbestimmten Bedingung genügende Hypertextverweis (16, 18, 20) in dem zweiten Hypertextdokument (10) entsprechend der Zustandsinformation modifiziert ist.

3. Verfahren nach Anspruch 2,
dadurch gekennzeichnet, daß in den Schritten c) und/oder f) weitere von der Zustandsinformation abhängige Modifikationen des jeweiligen Hypertextdokuments (10, 12) vorgenommen werden.

4. Verfahren nach einem der Ansprüche 1 bis 3,
dadurch gekennzeichnet, daß die Schritte d) bis f) wiederholt ausgeführt werden, wobei die Zustandsinformation verändert werden oder unverändert bleiben kann.

5. Verfahren nach einem der Ansprüche 1 bis 4,
dadurch gekennzeichnet, daß die in Schritt b) bestimmte Zustandsinformation nicht aus der ersten Anforderung (58) ableitbar ist, und/oder daß in den Schritten c) und/oder f) zur Modifikation eines Hypertextverweises (16, 18, 20) die Zustandsinformation in den Hypertextverweis (16, 18, 20) eingefügt wird, und/oder daß in Schritt d) aus der zweiten Anforderung (74) ein Name des zweiten Hypertextdokuments (12) ermittelbar ist.

6. Verfahren nach einem der Ansprüche 1 bis 5,
dadurch gekennzeichnet, daß in den Schritten c) und/oder f) jeweils auf ein vorverarbeitetes Hypertextdokument zugegriffen wird, in dem diejenigen Hypertextverweise (16, 18, 20) des entsprechenden Hypertextdokuments (10) gekennzeichnet sind, die der vorbestimmten Bedingung genügen.

7. Verfahren nach einem der Ansprüche 1 bis 6,
dadurch gekennzeichnet, daß die vorbestimmte Bedingung lautet, daß der Hypertextverweis (16, 18, 20) auf ein internes Hypertextdokument oder auf ein externes Hypertextdokument eines vorbestimmten Anbieters verweist.

8. Verfahren nach einem der Ansprüche 1 bis 7,
dadurch gekennzeichnet, daß jedes Hypertextdokument (10, 12) in derselben Seitenbeschreibungssprache abgefaßt ist wie das entsprechende modifizierte Hypertextdokument (68, 84), und/oder daß die Darstellung jedes Hypertextdokuments (10, 12) durch einen Browser (24) im wesentlichen identisch mit der Darstellung des entsprechenden modifizierten Hypertextdokuments (68, 84) durch diesen Browser (24) ist.

9. Verfahren nach einem der Ansprüche 1 bis 8,
dadurch gekennzeichnet, daß die Zustandsinformation ein Identifikator ist und/oder daß das zustandslose Protokoll ein HTTP-Protokoll ist und/oder daß jedes Hypertextdokument (10, 12) in einer der Seitenbeschreibungssprachen SGML, HTML oder XML abgefaßt ist und/oder daß jeder Hypertextverweis (16, 18, 20) einen URL aufweist und/oder daß jeder Hypertextverweis (16, 18, 20) ein Anker-Tag mit einem HREF-Attribut aufweist und/oder daß der Datenaustausch über das Internet erfolgt.

10. Als Server (28) ausgestaltete Vorrichtung zum Bereitstellen von Zustandsinformationen bei der Übertragung von Hypertextdokumenten über ein zustandsloses Protokoll, insbesondere zum Ausführen eines Verfahrens nach einem der Ansprüche 1 bis 9, mit:
- Mitteln zum Empfangen einer ersten Anforderung (58) für ein erstes Hypertextdokument (10),
- Mitteln zum Bestimmen einer Zustandsinformation,
- Mitteln zum Senden (70) eines ersten modifizierten Hypertextdokuments (68), das sich zumindest dadurch von dem ersten Hypertextdokument (10) unterscheidet, daß jeder einer vorbestimmten Bedingung genügende Hypertextverweis (16, 18, 20) in dem ersten Hypertextdokument (10) entsprechend der Zustandsinformation modifiziert ist,
- Mitteln zum Empfangen einer zweiten Anforderung (74) für ein zweites Hypertextdokument (12), wobei die Zustandsinformation aus der zweiten Anforderung (74) ermittelbar ist,
- Mitteln zum Ermitteln der Zustandsinformation aus der zweiten Anforderung (74), und
- Mitteln zum Senden (86) eines zweiten modifizierten Hypertextdokuments (84), das in Abhängigkeit von der Zustandsinformation modifiziert ist.
